# EUROPEAN PATENT SPECIFICATION

(11) **EP 3 098 687 B1**
(45) Date of publication and mention of the grant of the patent: **03.07.2019**
(21) Application number: 16170929.0
(22) Date of filing: 23.05.2016
(51) Int. Cl.: G06F 1/30, G06F 1/28

(54) **ELECTRONIC DEVICE AND POWER MANAGING METHOD THEREOF**
ELEKTRONISCHE VORRICHTUNG UND LEISTUNGSVERWALTUNGSVERFAHREN DAFÜR
DISPOSITIF ÉLECTRONIQUE ET SON PROCÉDÉ DE GESTION DE PUISSANCE

(30) Priority: 28.05.2015 KR 20150075274
(43) Date of publication of application: 30.11.2016
(73) Proprietor: Samsung Electronics Co., Ltd., Gyeonggi-do 16677 (KR)
(72) Inventor: Lim, Ji Hyuk, Suwon-si 16677 (KR)
(74) Representative: Nederlandsch Octrooibureau

(56) References cited:
- EP-A2- 0 593 198
- US-A- 5 428 252
- US-A- 5 661 780
- US-A1- 2015 077 127
- US-B1- 6 571 343

## Description

The present application claims priority to a Korean patent application filed on May 28, 2015 in the Korean Intellectual Property Office and assigned Serial number 10-2015-0075274.

### BACKGROUND

### 1. Field of the Disclosure

The present disclosure relates to an electronic device and a power managing method thereof.

### 2. Description of the Related Art

With advancement of electronic devices, a variety of electronic products are developed and popularized for consumers. In particular, portable electronic devices such as smart phones, tablet computers are widely commercialized in recent years. Portable electronic devices employ embedded or detachable batteries as power supplies for their portability. As batteries have finite capacities, electronic devices can be operable after replacing or recharging the batteries in the case that the batteries become short in residual.

Reduced battery residual may drop a voltage of the battery. If a battery voltage is lower than or equal to a specific level, an electronic device thereof may be turned off because of insufficient drivability. If power of an electronic device is repaired by replacement or recharge after turn-off, the electronic device begins with a booting process at the first turn-on time. Although a battery of an electronic device begins to be charged even in a power-off state, a user is not able to use the electronic device immediately. An electronic device in charge needs a time for obtaining least power to stably boot itself or needs a given time for booting itself.

US 6571343 relates to an apparatus and method for reserving power in a handheld computer by inducing a sleep mode when the energy supply of the handheld computer reaches a predetermined low level. A software is provided which operates a sleep mode when a device of the handheld computer detects
a predetermined low battery voltage. A processor operates the software to place the handheld computer in a low energy-consuming shutdown state in which an interrupt controller operates to mask those interrupt signals thus providing an user with the impression that the device has entered an unresponsive sleep mode. In maintaining the sleep mode, the processor operates such that all input signals that request the handheld computer to power up remain active but so long as the battery voltage remains below a predetermined voltage the interrupt signals to power up selected applications and devices are masked. A method for returning the handheld computer to its normal operational mode once the energy supply has been replenished, is also provided.

US 5661780 relates to a cordless telephone can include a base unit including a cordless telephone circuit, a power source circuit and a resistor connected between a pair of power output terminals of the power source circuit, and a handset unit including a cordless telephone circuit, a secondary battery, a circuit connected between a charging terminal which receives power supply output from the power source circuit and a terminal of the secondary battery and consisting of a diode and a resistor connected in parallel to each other and a power break detection circuit.

US2015077127 and EP0593198 describe further relevant art.

### SUMMARY

The invention is as set out in the independent claims.

Any described embodiment that does not fall within the scope of the claims, is not part of the invention.

To address the above-discussed deficiencies, it is a primary object to provide at least the advantages described below. Accordingly, an aspect of the present disclosure is to provide an electronic device that enters a state of using least power without turning off the electronic device even if a battery voltage is lower than or equal to a specific voltage, and a power managing method thereof.

In accordance with an aspect of the present disclosure, an electronic device includes a battery configured to supply power to the electronic device, a power management module configured to transfer a first low-voltage interrupt to a processor if a voltage of the battery is lower than or equal to a first voltage, and the processor configured to enter a sleep mode if the first low-voltage interrupt is received from the power management module, wherein the processor is configured to ignore other interrupt except an interrupt, which is received from the power management module, in the sleep mode.

In accordance with an aspect of the present disclosure, a power managing method of an electronic device includes generating a first low-voltage interrupt from a power management module if a battery voltage is lower than or equal to a first voltage, entering a sleep mode if the first low-voltage interrupt is generated, and ignoring other interrupt except an interrupt that is generated from the power management module in the sleep mode.

In accordance with an aspect of the present disclosure, a computer-readable recording medium may record a program, which is executed, causing an electronic device, to perform a method. The method may include generating a first low-voltage interrupt from a power management module if a battery voltage is lower than or equal to a first voltage, entering a sleep mode if the first low-voltage interrupt is generated, and ignoring other interrupt except an interrupt that is generated from the power management module in the sleep mode.

Other aspects, advantages, and salient features of the disclosure will become apparent to those skilled in the art from the following detailed description, which, taken in conjunction with the annexed drawings, discloses various embodiments of the present disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a block diagram illustrating a configuration of an electronic device according to various embodiments of the present invention;
FIGS. 2A and 2B illustrate user interfaces according to various embodiments of the present invention;
FIG. 3 is a flow chart showing a power management method according to various embodiments of the present invention; and
FIG. 4 is a block diagram illustrating an electronic device according to various embodiments of the present invention.

Throughout the drawings, it should be noted that like reference numbers are used to depict the same or similar elements, features, and structures.

### DETAILED DESCRIPTION

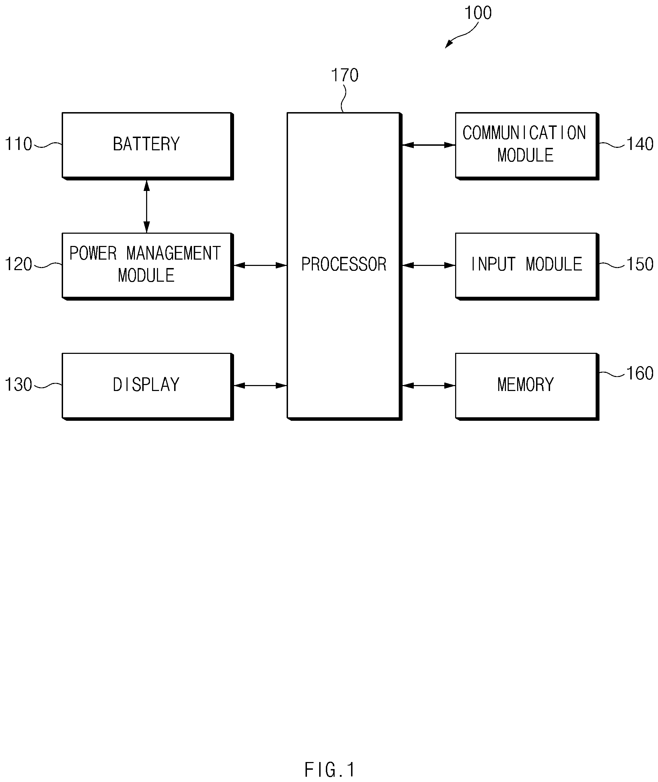

FIGURES 1 through 4, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device. Hereinafter, various embodiments of the present disclosure will be described in conjunction with the accompanying drawings. Various embodiments described herein, however, may not be intentionally confined in specific embodiments, but should be construed as including diverse modifications, equivalents, and/or alternatives. With respect to the descriptions of the drawings, like reference numerals refer to like elements.

The terms "have", "may have", "include", "may include", "comprise", or "may comprise" used herein indicate existence of corresponding features (e.g., numerical values, functions, operations, or components) but does not exclude other features.

As used herein, the terms "A or B", "at least one of A or/and B", or "one or more of A or/and B" may include all allowable combinations which are enumerated together. For example, the terms "A or B", "at least one of A and B", or "at least one of A or B" may indicate all cases of: (1) including at least one A, (2) including at least one B, or (3) including both at least one A, and at least one B.

As used herein, the terms such as "1st", "2nd", "first", "second", and the like may be used to qualify various elements regardless of their order and/or priority, simply differentiating one from another, but do not limit those elements thereto. For example, both a first user device and a second user device indicate different user devices. For example, a first element may be referred to as a second element and vice versa without departing from the scope of the present disclosure.

As used herein, if one element (e.g., a first element) is referred to as being "operatively or communicatively connected with/to" or "connected with/to" another element (e.g., a second element), it should be understood that the former may be directly coupled with the latter, or connected with the latter via an intervening element (e.g., a third element). Otherwise, it will be understood that if one element is referred to as being "directly coupled with/to" or "directly connected with/to" with another element, it may be understood that there is no intervening element (e.g., a third element) existing between them.

In the description or claims, the term "configured to" (or "set to") may be changeable with other implicative meanings such as "suitable for", "having the capacity to", "designed to", "adapted to", "made to", or "capable of', and may not simply indicate "specifically designed to". Alternatively, in some circumstances, a term "a device configured to" may indicate that the device "may do" something together with other devices or components. For instance, a term "a processor configured to (or set to) perform A, B, and C" may indicate a generic-purpose processor (e.g., CPU or application processor) capable of performing its relevant operations by executing one or more software or programs which is stored in an exclusive processor (e.g., embedded processor), which is prepared for the operations, or in a memory.

The terms used in this specification are just used to describe various embodiments of the present disclosure and may not be intended to limit the scope of the present disclosure. The terms of a singular form may include plural forms unless otherwise specified. Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevantly related art and not in an idealized or overly formal detect unless expressly so defined herein in various embodiments of the present disclosure. In some cases, terms even defined in the specification may not be understood as excluding embodiments of the present disclosure.

An electronic device according to various embodiments of the present disclosure may include, for example, at least one of smart phones, tablet personal computers (tablet PC), mobile phones, video telephones, electronic book readers, desktop PCs, laptop PCs, netbook computers, workstations, servers, personal digital assistants (PDA), portable multimedia players (PMP), MP3 players, mobile medical devices, cameras, wearable devices. According to various embodiments, the wearable devices may include at least one of accessories (e.g., watches, rings, bracelets, anklets, necklaces, glasses, contact lenses, or head-mounted devices (HMD)), assembled textiles or clothes (e.g., electronic apparel), body-attachable matters (e.g., skin pads or tattoos), or implantable devices (e.g., implantable circuits).

In some embodiments, an electronic device may be a smart home appliance. The smart home appliance, for example, may include at least one of televisions (TV), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSync™, Apple TV™, Google TV™, and the like), game consoles (e.g., Xbox™, PlayStation™, and the like), electronic dictionaries, electronic keys, camcorders, electronic picture frames, and the like.

In other embodiments, an electronic device may include at least one of diverse medical devices (e.g., portable medical measuring instruments (blood-sugar measuring instruments, heart-pulsation measuring instruments, blood-pressure measuring instruments, or body-temperature measuring instruments), magnetic resonance angiography (MRA) equipment, magnetic resonance imaging (MRI) equipment, computed tomography (CT) equipment, scanners, and ultrasonic devices), navigation device, global positioning system (GPS) receiver, event data recorder (EDR), flight data recorders (FDR), vehicle infotainment devices, electronic equipment for vessels (e.g., navigation systems and gyrocompasses), avionics, security devices, head units for vehicles, industrial or home robots, automatic teller's machines (ATM) for financial agencies, points of sales (POS) for stores, and internet of things (e.g., electric bulbs, diverse sensors, electric or gas meter, spring cooler units, fire alarms, thermostats, road lamps, toasters, exercise implements, hot water tanks, boilers, and the like).

According to some embodiments, an electronic device may include at least one of parts of furniture or buildings/structures having communication functions, electronic boards, electronic-signature receiving devices, projectors, and diverse measuring instruments (e.g., water meters, electricity meters, gas meters, and wave meters) including metal cases. In various embodiments, an electronic device may be one or more combinations of the above-mentioned devices. Electronic devices according to some embodiments may be flexible electronic devices. Additionally, electronic devices according to various embodiments of the present disclosure may not be restrictive to the above-mentioned devices, rather may include new electronic devices emerging by way of technical development.

Hereinafter, an electronic device according to various embodiments will be described in conjunction with the accompanying drawings. In description for various embodiments, the term "user" may refer to a person using an electronic device or a device (e.g., an artificial intelligent electronic device) using an electronic device.

FIG. 1 is a block diagram illustrating a configuration of an electronic device according to various embodiments of the present invention.

Referring to FIG. 1, the electronic device 100 can include a battery 110, a power management module 120, a display 130, a communication module 140, an input module 150, a memory 160, and a processor 170.

The battery 110 can supply power to respective elements included in the electronic device 100 under control of the power management module 120. For example, the battery 110 can supply power the power management module 120, the display 130, the communication module 150, the memory 160, or the processor 170. According to an embodiment, the battery 110 can include a rechargeable cell (e.g., lithium-ion cell) and/or a solar cell.

The power management module 120 can control the battery 110 to manage power of the electronic device 100. According to an embodiment, the power management module 120 can include a power management integrated circuit (PMI), a charger integrated circuit (IC), or a battery or fuel gauge. A PMIC can operate in a wired and/or wireless charge mode. A wireless charge mode, for example, can include the mode of magnetic resonance, magnetic induction, or electromagnetic wave, and can further include additional circuits such as coil loop, resonance circuit, or rectifier. A battery gauge, for example, can measure residual, voltage, current, or temperature of the battery 120.

According to an embodiment, if a voltage of the battery is lower than or equal to a first voltage (e.g., 3.5 V), the power management module 120 can generate a first low-voltage interrupt. The first voltage, for example, can be set to the least voltage for stably driving the electronic device 100.

According to an embodiment, if a voltage of the battery is lower than or equal to the first voltage, the power management module 120 can calculate the maximum duration according to battery residual. For example, the power management module 120 can calculate a time of allowing the processor 170 to maintain a sleep mode with the current battery residual. The power management module 120 can transfer information of the maximum duration to the processor 170.

According to an embodiment, if a voltage of the battery is lower than or equal to a second voltage (e.g., 3 V), the power management module 120 can generate a second low-voltage interrupt to the processor 170. The second voltage, for example, can be set to be lower than the first voltage. The second voltage, for example, can be set to the least voltage for stably driving the electronic device 100 in the sleep mode (or inactive mode).

According to an embodiment, the power management module 120 can generate a charge start interrupt to the processor 170 if the battery 110 begins to be charged.

The display 130 can display a user interface. For example, the display 130 can display an application execution screen, a lockup screen, and a main screen.

According to an embodiment, the display 130 can display a user interface to inform entry of the sleep mode. According to an embodiment, the display 130 can display a user interface to inform entry of an awaking mode (or wakeup mode). According to an embodiment, if a voltage of the battery 110 is lower than or equal to the first voltage (or if the first low-voltage interrupt is generated), the display 130 can display a user interface to select whether to enter the sleep mode or whether to turn off power of the electronic device 100.

The communication module 140 can transmit and receive data through a network (e.g., mobile communication network or internet network) to provide voice call, video call, message service, or internet service. According to an embodiment, the communication module 140 can include a wireless-fidelity (Wi-Fi) module, a Bluetooth module, a near field communication (NFC) module, or a global navigation satellite system (GNSS) module. According to an embodiment, the communication module 140 can identify and authenticate the electronic device 100, using a subscriber identification module such as subscriber identification module (SIM) card, when being connected with a mobile communication module.

The input module 150 can input a user instruction. According to an embodiment, the input module 150 can include a touch sensor for sensing touch manipulation by a user, or a pen sensor panel for sensing pen manipulation by a user. According to an embodiment, the input module 150 can sense a user's manipulation which is input in a specific distance even without direct touch to a panel (e.g., touch sensor panel or pen sensor panel), as well as a user's manipulation with direct touch to the panel. According to an embodiment, the input module 150 can include a gesture sensor for recognizing a user's gesture or a voice sensor for detecting a user's voice.

According to an embodiment, if a voltage of the battery 110 is lower than or equal to the first voltage, the input module 150 can input a user's manipulation to select whether to enter the sleep mode. For example, a user can be able to input his manipulation through a user interface, which is displayed on the display 130, to set whether to enter the sleep mode according to a battery status.

According to an embodiment, the memory 160 can include a volatile memory (e.g., random access memory (RAM) and nonvolatile memory (e.g., flash memory)). According to an embodiment, the memory 160 can store data. For example, the memory 160 can store software, programs, applications, and user contents (e.g., photographs, motion pictures, etc.). According to an embodiment, the processor 170 can load data into a volatile memory from a nonvolatile memory and can process diverse instructions or calculations.

The processor 170 can perform general operations of the electronic device 100. The processor 170 can independently control the power management module 120, the display 130, the communication module 140, and the input module 150 to manage power of the electronic device 100 according to various embodiments of the present invention.

According to an embodiment, the processor can operate in the awaking mode (or active mode) or in the sleep mode (or inactive mode). The awaking mode, for example, can mean a state for which the processor 170 is executing an application or a specific operation by an application which is on execution, or a state for which that the processor 170 is ready to execute a specific operation by an application is on execution. The processor 170 can execute an application to provide a user with diverse services such as social network service (SNS), instant messages, games, and so on. The sleep mode, for example, can mean a state for which the processor 170 does not any operation or is incapable of performing an operation.

According to an embodiment, if a specific condition is satisfied in the awaking mode, the processor 170 can enter the sleep mode. For example, if there is no input of an instruction from a user for a specific time, the processor 170 can enter the sleep mode. For another example, the processor 170 can enter the sleep mode if there is an input of a sleep-mode entry instruction from a user.

According to an embodiment, the processor 170 can identify an interrupt for entering the awaking mode from the sleep mode. According to an embodiment, if a specific interrupt is received in the sleep mode, the processor 170 can enter the awaking mode. For example, if a user's manipulation (e.g., touch manipulation or hardware key manipulation) is received in the sleep mode or if an interrupt is received (e.g., by message or call) from an application which is on execution in the background, the processor 170 can enter the awaking mode to perform its corresponding operation. The application on execution in the background, for example, can mean an application which has been executed by the processor 170 and loaded in a nonvolatile memory, or which is not executed by the processor 170.

According to an embodiment, the processor 170 can enter the sleep mode if the first low-voltage interrupt is received from the power management module 120. According to an embodiment, the processor 170 can enter the sleep mode after a specific time (e.g., 10 seconds) since the first low-voltage interrupt is received from the power management module 120. According to an embodiment, the processor 170 can turn off the electronic device 100 in the case that the processor 170 is not set to enter the sleep mode when a voltage of the battery 10 is lower than or equal to the first voltage (or if the first low-voltage interrupt is generated).

According to an embodiment, the processor 170 can ignore other interrupt except an interrupt, which is input from the power management module 120, if the processor 170 enters the sleep mode in response to the first low-voltage interrupt. For example, even if an interrupt is received from an application which is on execution in the background, the processor 170 can ignore the interrupt without execution of an operation corresponding to the interrupt. For another example, even if an interrupt is received by message reception through the communication module 140 or by a user's instruction input into the input module 150, the processor 170 can ignore the interrupt without execution of an operation corresponding to the interrupt.

According to an embodiment, if the first low-power interrupt is received from the power management module 120, processor 170 can inactivate a part of other elements (e.g., the display 130, the communication module 140, and the input module 150) in the electronic device 100. For example, the processor 170 can inactivate the communication module 140 to interrupt connection to a network or can inactivate the input module 150 to control a user instruction not to be sensed.

According to various embodiments of the present invention, in the case that the processor 170 enters the sleep mode according to the first low-voltage interrupt, the processor 170 can stably maintain power of the electronic device 100, even when the battery 110 is laid on a low voltage state, by ignoring other interrupt except an interrupt received from the power management module 120 and by inactivating a part of the elements of the electronic device 100.

According to an embodiment, if the first low-voltage interrupt is received from the power management module 120, the processor 170 can control the display 130 to display an object to inform entry of the sleep mode. According to an embodiment, if information of the maximum duration is received from the power management module 120, the processor 170 can control the display to display an object to inform the maximum duration.

According to an embodiment, if the second low-voltage interrupt is received from the power management module 120, the processor 170 can turn off power of the electronic device. According to an embodiment, the processor 170 can turn off power of the electronic device after the maximum duration since entry of the sleep mode. That is, after the maximum duration time or if a voltage of the battery 110 is lower than or equal to the second voltage, the processor 170 can turn off power of the electronic device 100 by determining that it is impossible to stably drive the electronic device 100 even in the sleep mode.

According to an embodiment, if the charge start interrupt is received from the power management module in the sleep mode according to the first low-voltage interrupt, the processor 170 can enter the awaking mode. According to an embodiment, in the case of inactivating a part of the elements of the electronic device 100, the processor 170 can activate the inactivated elements if the processor enters the awaking mode. For example, the processor 170 can activated the communication module 140 to connect the electronic device 100 with a network. For another example, the processor 170 can activate the input module 150 to be changed into a state for detecting a user instruction. According to an embodiment, if the processor 170 enters the awaking mode, the processor 170 can allow the display 130 to display an object to inform the entry of the awaking mode.

According to an embodiment, in the case that the processor 170 enters the awaking mode according to the charge start interrupt after entering the sleep mode according to the first low-voltage interrupt, a user can be able to stably use the electronic device 100 in a short time because there is no need of booting the electronic device.

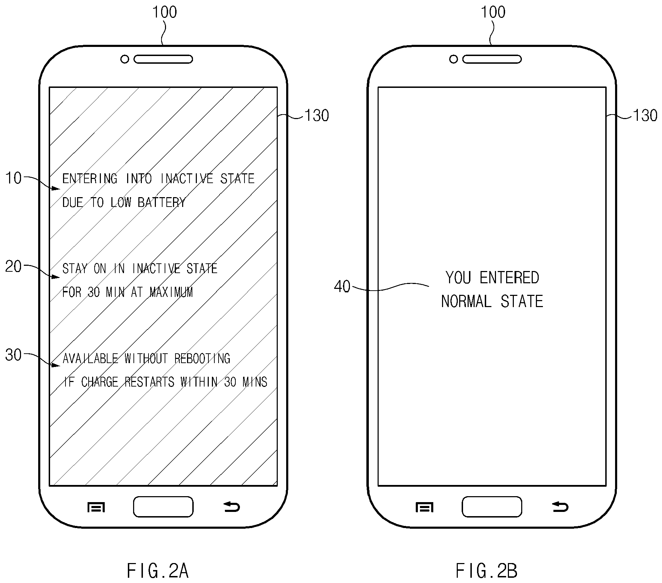

FIGS. 2A and 2B illustrate user interfaces according to various embodiments of the present invention.

FIG, 2A illustrates a user interface displayed in the display 130 in response to generation of the first low-voltage interrupt. Referring to FIG. 2A, if the first low-voltage interrupt is generated from the power management module 120, the display 130 can display a message 10 to inform entry of the sleep mode. For example, the display 130 can display a text object like "Entering into inactive state due to low battery". For another example, the display 130 can display an object of empty battery shaped icon (or image). If the first low-voltage interrupt is generated from the power management module 120, the display 130 can display a message 20 which indicates the maximum duration. For example, the display 130 can display a text object like "Stay on in inactive state for 30 min at maximum". If battery charging begins within the maximum duration, the display 130 can display a message 30 to inform that the electronic device 100 is available without rebooting if battery charge begins within a certain time. For example, 130 can display a text object like "Available without rebooting if battery charge begins within 30 min".

According to embodiment, if the first low-voltage interrupt is generated from the power management module 120, the display 130 can display a user interface for a specific time. After a specific time, the processor 170 can inactivate the display 140 and then can enter the sleep mode.

FIG. 2B illustrates a user interface displayed in the display 130 in response to generation of the charge start interrupt. Referring to FIG. 2B, if the charge start interrupt is generated from the power management module 120 after the processor 170 enters the sleep mode in response to generation of the first low-voltage interrupt, the display 130 can display an object to inform entry of the awaking mode. For example, the display 130 can display a text object "You entered normal state".

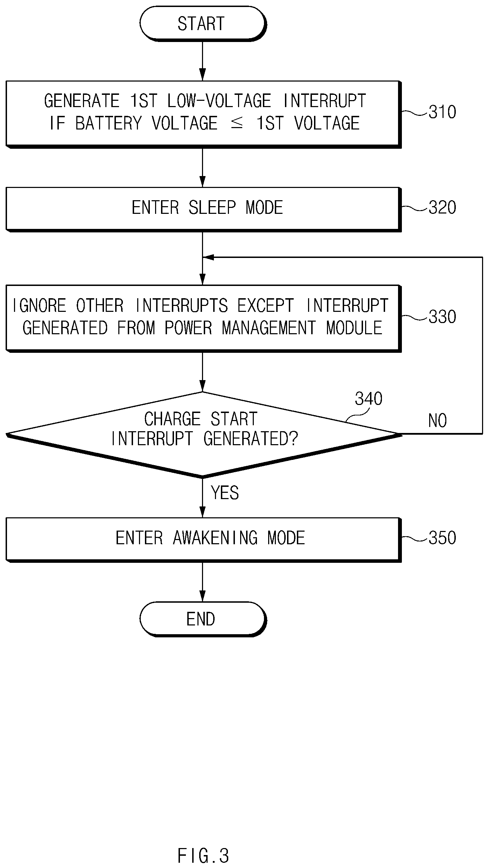

FIG. 3 is a flow chart showing a power management method according to various embodiments of the present invention.

The flow chart shown in FIG. 3 can be composed of operations processed in the electronic device 100 illustrated in FIG. 1. Therefore, the descriptions stated in conjunction with FIGS. 1 to 2B, even omitted hereafter, can be applicable to the flow chart of FIG. 3.

Referring to FIG. 3, if a voltage of the battery is lower than or equal to the first voltage, the electronic device 100 can generate the first low-voltage interrupt. According to an embodiment, if a voltage of the battery is lower than or equal to the first voltage, the power management module 120 can generate the first low-voltage interrupt. According to an embodiment, if the first low-voltage interrupt is received from the power management module 120, the processor 170 can display an object to inform entry of the sleep mode on the display 130.

According to an embodiment, if a voltage of the battery is lower than or equal to the first voltage, the electronic device 100 can calculate the maximum duration. For example, the electronic device 100 can calculate a time for retaining the sleep mode with current battery residual. According to an embodiment, the electronic device 100 can control the display 130 to display an object to inform the maximum duration.

According to an embodiment, in operation 320, the electronic device 100 can enter the sleep mode. According to an embodiment, if the first low-voltage interrupt is generated, the electronic device 100 can enter the sleep mode. According to an embodiment, after a specific time (e.g., 10 seconds) since the first low-voltage interrupt is received from the power management module 120, the electronic device 100 can enter the sleep mode. According to an embodiment, the electronic device 100 can be even turned off without entering the sleep mode although the first low-voltage interrupt is generated.

According to an embodiment, if the sleep mode begins in response to the first low-voltage interrupt, the electronic device 100 can ignore other interrupt except an interrupt, which is generated from the power management module 120, in operation 330. For example, even if an interrupt is received from an application which is on execution in the background, the electronic device 100 can ignore the interrupt without execution of an operation corresponding to the interrupt. For another example, even if an interrupt is received by message reception through the communication module 140 or by a user's instruction input into the input module 150, the electronic device 100 can ignore the interrupt without execution of an operation corresponding to the interrupt.

According to an embodiment, if the first low-voltage interrupt is generated, the electronic device 100 can inactivate a part of the elements thereof (e.g., the display 130, the communication module 140, and the input module 150).

According to an embodiment, if the sleep mode begins according to the first low-voltage interrupt, in operation 340, the electronic device 100 can determine whether the charge start interrupt begins.

According to an embodiment, if the charge start interrupt begins, the electronic device 100 can enter the awaking mode in operation 350. According to an embodiment, if the awaking mode begins in the case of inactivating a part of the elements, the electronic device 100 can activate the inactivated elements. According to an embodiment, if the awaking mode begins, the electronic device 100 can display an object to inform entry of the awaking mode on the display 130.

According to an embodiment, if a voltage of the battery is lower than or equal to the second voltage which is lower than the first voltage, the electronic device 100 can generate the second low-voltage interrupt. According to an embodiment, if a voltage of the battery is lower than or equal to the first voltage, the power management module 120 of the electronic device 120 can generate the first low-voltage interrupt. If the second low-voltage interrupt is generated, the electronic device 100 can be turned off in power. According to an embodiment, the electronic device 100 can be turned off in power after the maximum duration since the entry of the sleep mode.

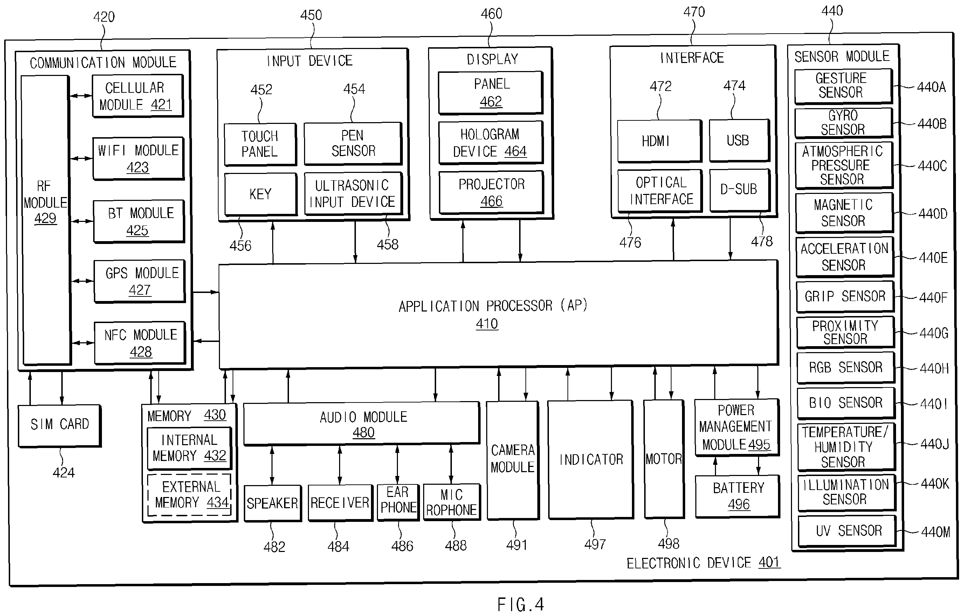

FIG. 4 is a block diagram illustrating an electronic device according to various embodiments of the present invention.

Referring to FIG. 4, the electronic device 400 can include, for example, all or a part of elements of the electronic device 100 shown in FIG. 1. The electronic device 400 can include at least one of one or more application processors (AP) 410, a communication module 420, a subscriber identification module (SIM) card 424, a memory 430, a sensor module 440, an input unit 450, a display 460, an interface 470, an audio module 480, a camera module 491, a power management module 495, a battery 496, an indicator 497, or a motor 498.

The processor (AP) 410 can drive an operating system (OS) or an application to control a plurality of hardware or software elements connected to the processor 410 and can process and compute a variety of data including multimedia data. The processor 410 can be implemented with a system-on-chip (SoC), for example. According to an embodiment, the processor 410 can further include a graphic processing unit (GPU) and/or an image signal processor. The processor 410 can even include at least a part of the elements shown in FIG. 4. The processor 410 can process instructions or data, which are received from at least one of other elements (e.g., a nonvolatile memory), and then store diverse data into such a nonvolatile memory.

The communication module 420, for example, can include a cellular module 421, a Wi-Fi module 423, a Bluetooth module 425, a GPS module 427, an NFC module 428, and a radio frequency (RF) module 429.

The cellular module 421, for example, can provide voice call, video call, a character service, or an Internet service through a communication network. According to an embodiment, the cellular module 421 can perform discrimination and authentication of an electronic device within a communication network using a subscriber identification module (e.g., a SIM card) 424. According to an embodiment, the cellular module 421 can perform at least a portion of functions that the processor 410 provides. According to an embodiment, the cellular module 421 can include a communication processor (CP).

In some embodiments, at least a part (e.g., two or more elements) of the cellular module 421, the Wi-Fi module 423, the Bluetooth module 425, the GPS module 427, and the NFC module 428 can be included within one integrated circuit (IC) or an IC package.

The RF module 429 can transmit and receive, for example, communication signals (e.g., RF signals). The RF module 429 can include a transceiver, a power amplifier module (PAM), a frequency filter, a low noise amplifier (LNA), or an antenna. According to another embodiment, at least one of the cellular module 421, the Wi-Fi module 423, the Bluetooth module 425, the GPS module 427, and the NFC module 428 can transmit and receive an RF signal through a separate RF module.

The SIM card 424 can include, for example, a card, which has a subscriber identification module, and/or an embedded SIM, and include unique identifying information (e.g., integrated circuit card identifier (ICCID)) or subscriber information (e.g., integrated mobile subscriber identify (IMSI)).

The memory 430 can include, for example, an embedded memory 432 or an external memory 434. For example, the embedded memory 432 can include at least one of a volatile memory (e.g., a dynamic RAM (DRAM), a static RAM (SRAM), a synchronous dynamic RAM (SDRAM), etc.), a nonvolatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a NAND flash memory, a NOR flash memory, etc.), a hard drive, or solid state drive (SSD).

The external memory 434 can further include a flash drive, for example, a compact flash (CF), a secure digital (SD), a micro-secure digital (SD), a mini-SD, an extreme digital (xD), or a memory stick. The external memory 434 can be functionally and/or physically connected with the electronic device 400 through various interfaces.

The sensor module 440 can measure, for example, a physical quantity, or detect an operation state of the electronic device 400, to convert the measured or detected information to an electric signal. The sensor module 440 can include at least one of a gesture sensor 440A, a gyro sensor 440B, a barometer pressure sensor 440C, a magnetic sensor 440D, an acceleration sensor 440E, a grip sensor 440F, a proximity sensor 440G, a color sensor 440H (e.g., RGB sensor), a biometric sensor 440I, a temperature/humidity sensor 440J, an illuminance sensor 440K, or an UV sensor 440M. Additionally or generally, though not shown, the sensor module 440 can further include an E-nose sensor, an electromyography sensor (EMG) sensor, an electroencephalogram (EEG) sensor, an electrocardiogram (ECG) sensor, an infrared (IR) sensor, an iris sensor, or a fingerprint sensor, for example. The sensor module 440 can further include a control circuit for controlling at least one or more sensors included therein. In some embodiments, the electronic device 401 can further include a processor, which is configured to control the sensor module 440, as a part or additional element, thus controlling the sensor module 440 while the processor 410 is in a sleep state.

The input unit 450 can include, for example, a touch panel 452, a (digital) pen sensor 454, a key 456, or an ultrasonic input unit 458. The touch panel 452 can recognize, for example, a touch input using at least one of a capacitive type, a resistive type, an infrared type, or an ultrasonic wave type. Additionally, the touch panel 452 can further include a control circuit. The touch panel 452 can further include a tactile layer to provide a tactile reaction for a user.

The (digital) pen sensor 454 can be a part of the touch panel 452, or a separate sheet for recognition. The key 456, for example, can include a physical button, an optical key, or a keypad. The ultrasonic input unit 458 can allow the electronic device 400 to detect a sound wave using a microphone (e.g., a microphone 488), and determine data through an input tool generating an ultrasonic signal.

The display 460 (e.g., the display 130) can include a panel 462, a hologram device 464, or a projector 466. The panel 462, for example, can be implemented to be flexible, transparent, or wearable. The panel 462 and the touch panel 452 can be implemented in one module. The hologram device 464 can show a three-dimensional image in a space using interference of light. The projector 466 can project light onto a screen to display an image. The screen, for example, can be positioned in the inside or outside of the electronic device 400. According to an embodiment, the display 460 can further include a control circuit for controlling the panel 462, the hologram device 464, or the projector 466.

The interface 470, for example, can include a high-definition multimedia interface (HDMI) 472, a USB 474, an optical interface 476, or a D-sub (D-subminiature) 478. The interface 470, for example, can include a mobile high definition link (MHL) interface, an SD card/multi-media cared (MMC) interface, or an Infrared data association (IrDA) standard interface.

The audio module 480 can convert a sound and an electric signal in dual directions. The audio module 480, for example, can process sound information that is input or output through the speaker 482, the receiver 484, the earphone 486, or the microphone 488.

The camera module 491 can be a unit which is capable of taking a still picture and a moving picture. According to an embodiment, the camera module 491 can include one or more image sensors (e.g., a front sensor or a rear sensor), a lens, an image signal processor (ISP), or a flash (e.g., an LED or a xenon lamp).

The power management module 495 can manage, for example, power of the electronic device 400. The power management module 495 can include, for example, a power management integrated circuit (PMIC) a charger integrated circuit (IC), or a battery or fuel gauge. The PMIC can operate in wired and/or wireless charging mode. A wireless charging mode can include, for example, diverse types of magnetic resonance, magnetic induction, or electromagnetic wave. For the wireless charging, an additional circuit, such as a coil loop circuit, a resonance circuit, or a rectifier, can be further included therein. The battery gauge, for example, can measure a remnant of the battery 496, a voltage, a current, or a temperature during charging. The battery 496 can measure, for example, a residual, a voltage on charge, a current, or temperature thereof. The battery 496 can include, for example, a rechargeable battery and/or a solar battery.

The indicator 497 can display the following specific state of the electronic device 400 or a part (e.g., the processor 410) thereof: a booting state, a message state, or a charging state. The motor 498 can convert an electric signal into mechanical vibration and generate a vibration or haptic effect. Although not shown, the electronic device 400 can include a processing unit (e.g., a GPU) for supporting a mobile TV. The processing unit for supporting the mobile TV, for example, can process media data that is based on the standard of digital multimedia broadcasting (DMB), digital video broadcasting (DVB), or media flow (MediaFlo™).

Each of the above-described elements of the electronic device according to an embodiment of the present disclosure can be implemented using one or more components, and a name of a relevant component can vary with on the kind of the electronic device. The electronic device according to various embodiments of the present disclosure can include at least one of the above components. Also, a part of the components can be omitted, or additional other components can be further included. Also, some of the components of the electronic device according to the present disclosure can be combined to form one entity, thereby making it possible to perform the functions of the relevant components substantially the same as before the combination.

The term "module" used for the present disclosure, for example, can mean a unit including one of hardware, software, and firmware or a combination of two or more thereof. A "module", for example, can be interchangeably used with terminologies such as a unit, logic, a logical block, a component, a circuit, etc. The "module" can be a minimum unit of a component integrally configured or a part thereof. The "module" can be a minimum unit performing one or more functions or a portion thereof. The "module" can be implemented mechanically or electronically. For example, the "module" according to various embodiments of the present disclosure can include at least one of an application-specific integrated circuit (ASIC) chip performing certain operations, a field-programmable gate arrays (FPGAs), or a programmable-logic device, those of which have been known or to be developed in the future.

At least a part of an apparatus (e.g., modules or functions thereof) or a method (e.g., operations) according to various embodiments of the present disclosure, for example, can be implemented by instructions stored in a computer-readable storage medium in the form of a programmable module. In the case that the instruction executed by a processor (e.g., the processor 170), the one or more processors can perform a function corresponding to the instruction.

The computer-readable recording medium can include a hard disk, a magnetic media such as a floppy disk and a magnetic tape, an optical media such as compact disc read only memory (CD-ROM) and a digital versatile disc (DVD), a magneto-optical media such as a floptical disk, and the following hardware devices specifically configured to store and perform a program instruction (e.g., a programming module): read only memory (ROM), random access memory (RAM), and a flash memory. Also, a program instruction can include not only a mechanical code such as things generated by a compiler but also a high-level language code executable on a computer using an interpreter. The above hardware unit can be configured to operate via one or more software modules for performing an operation of the present disclosure, and vice versa.

A computer-readable recording medium recording a program, that when executed, causes an electronic device to perform a method comprising generating a first low-voltage interrupt from a power management module if a battery voltage is lower than or equal to a first voltage, entering a sleep mode if the first low-voltage interrupt is generated, and ignoring other interrupt except an interrupt that is generated from the power management module in the sleep mode.

A module or a programming module according to various embodiments of the present disclosure can include at least one of the above elements, or a part of the above elements can be omitted, or additional other elements can be further included. Operations performed by a module, a programming module, or other elements according to an embodiment of the present disclosure can be executed sequentially, in parallel, repeatedly, or in a heuristic method. Also, a portion of operations can be executed in different sequences, omitted, or other operations can be added thereto.

According to various embodiments, a computer-readable recording medium according to an embodiment can include an instruction which is executable by at least one processor. The instruction can be set to perform an operation of requesting page allocation of a process, an operation of allocating pages in a page group including the pages contiguous to the process.

According to various embodiments of the present invention, it may be allowable to stably maintain drivability of an electronic device without turning off even though a battery voltage is equal to or lower than a specific voltage.

According to various embodiments of the present invention, it may be permissible for a user to normally use an electronic device at the same time with the beginning of charge by driving the electronic device without an additional booting sequence if the charge begins from the condition that a battery voltage is equal to or lower than a specific voltage.

Although the present disclosure has been described with an exemplary embodiment, various changes and modifications may be suggested to one skilled in the art. It is intended that the present disclosure encompass such changes and modifications as fall within the scope of the appended claims.

## Claims

1. An electronic device (100) comprising:
a battery (110) configured to supply power to the electronic device;
a power management module (120) configured to transfer a first low-voltage interrupt to a processor if a voltage of the battery is lower than or equal to a first voltage;
an input module (150) configured to receive a user instruction; and
the processor (170) configured to enter a sleep mode if the first low-voltage interrupt is received from the power management module,
wherein the processor (170) is configured to ignore other interrupt except an interrupt received from the power management module during the sleep mode;
wherein the power management module is configured to transfer a charge start interrupt to the processor if the battery begins to be charged,
wherein the processor is configured to inactivate the input module if the first low-voltage interrupt is received from the power management module,
wherein the processor is configured to enter an awaking mode without rebooting the electronic device, if the charge start interrupt is received from the power management module in the sleep mode within a certain time during which, if battery charging begins, the electronic device will be available without rebooting;
wherein the power management module is further configured to calculate a maximum duration based on battery residual if the voltage of the battery is lower than or equal to the first voltage, and to transfer information of the maximum duration to the processor; and
wherein the maximum duration indicates the certain time.

2. The electronic device of claim 1, further comprising:
a communication module (140) configured to transmit and receive data in connection with a network;
wherein the processor is further configured to inactivate the communication module if the first low-voltage interrupt is received from the power management module.

3. The electronic device of claim 1, further comprising:
a display (130),
wherein the processor is configured to display an object to inform entry into the sleep mode on the display if the first low-voltage interrupt is received from the power management module.

4. The electronic device of claim 1, wherein the processor is configured to enter the sleep mode after a time has passed since the first low-voltage interrupt is received from the power management module.

5. The electronic device of claim 1, wherein the power management module is configured to transfer a second low-voltage interrupt to the processor if the voltage of the battery is lower than or equal to a second voltage that is lower than the first voltage, and
wherein the processor is configured to turn off power of the electronic device if the second low-voltage interrupt is received from the power management module.

6. The electronic device of claim 1, wherein the processor is configured to turn off power of the electronic device after the maximum duration since the entry of the sleep mode.

7. The electronic device of claim 1, further comprising:
a display,
wherein the processor is configured to display an object to inform the maximum duration on the display if the information of the maximum duration is received from the power management module.

8. The electronic device of claim 1, further comprising:
a display,
wherein the processor is configured to display an object to inform the entry of the awakening mode on the display if the awakening mode begins.

9. A power managing method of an electronic device, the method comprising:
generating (310) a first low-voltage interrupt from a power management module 120 if a battery voltage is lower than or equal to a first voltage;
entering (320) a sleep mode if the first low-voltage interrupt is generated;
inactivating an input module if the first low-voltage interrupt is generated;
ignoring (330) other interrupts except an interrupt generated from the power management module during the sleep mode;
entering (350) an awaking mode without rebooting the electronic device when a charge start interrupt is generated from the power management module in the sleep mode within a certain time during which, if battery charging begins, the electronic device will be available without rebooting; and
calculating a maximum duration based on battery residual if the voltage of the battery is lower than or equal to the first voltage;
wherein the maximum duration indicates the certain time.

10. The power managing method of claim 9, further comprising:
displaying an object to inform entry of the sleep mode on a display if a first low-voltage interrupt is generated from the power management module.

11. The power managing method of claim 9, wherein the entering of the sleep mode comprises:
entering the sleep mode after a time has passed since a first low-voltage interrupt is generated from the power management module.

12. The power managing method of claim 9, further comprising:
generating a second low-voltage interrupt from the power management module if the voltage of the battery is lower than or equal to a second voltage that is lower than the first voltage; and
turning off power of the electronic device if the second low-voltage interrupt is generated.

13. A computer-readable recording medium recording a program, that when executed, causes an electronic device to perform a method comprising:
generating(310) a first low-voltage interrupt from a power management module if a battery voltage is lower than or equal to a first voltage;
entering(320) a sleep mode if the first low-voltage interrupt is generated;
inactivating an input module if the first low-voltage interrupt is generated;
ignoring(330) other interrupt except an interrupt that is generated from the power management module in the sleep mode;
entering an awaking mode without rebooting the electronic device when a charge start interrupt is generated from the power management module in the sleep mode within a certain time during which, if battery charging begins, the electronic device will be available without rebooting; and
calculating a maximum duration based on battery residual if the voltage of the battery is lower than or equal to the first voltage;
wherein the maximum duration indicates the certain time.

## Patentansprüche

1. Elektronische Vorrichtung (100) mit:
einer Batterie (110), konfiguriert, um Energie an die elektronische Vorrichtung zu liefern;
einem Energieverwaltungsmodul (120), konfiguriert, um eine erste Niederspannungsunterbrechung an einen Prozessor zu übertragen, wenn eine Spannung der Batterie niedriger als oder gleich einer ersten Spannung ist;
einem Eingabemodul (150), konfiguriert, um eine Benutzeranweisung zu empfangen; und
wobei der Prozessor (170) konfiguriert ist, um in einen Schlafmodus einzutreten, wenn die erste Niederspannungsunterbrechung von dem Energieverwaltungsmodul empfangen wird,
wobei der Prozessor (170) konfiguriert ist, um andere Unterbrechungen zu ignorieren, außer einer Unterbrechung, die von dem Energieverwaltungsmodul während des Schlafmodus empfangen wird;
wobei das Energieverwaltungsmodul konfiguriert ist, um eine Ladungsstartunterbrechung an den Prozessor zu übertragen, wenn die Batterie beginnt, aufgeladen zu werden,
wobei der Prozessor konfiguriert ist, um das Eingabemodul zu deaktivieren, wenn die erste Niederspannungsunterbrechung von dem Energieverwaltungsmodul empfangen wird,
wobei der Prozessor konfiguriert ist, um in einen Aufweckmodus einzutreten, ohne die elektronische Vorrichtung neu zu starten, wenn die Ladungsstartunterbrechung von dem Energieverwaltungsmodul im Schlafmodus innerhalb einer gewissen Zeit empfangen wird, während welcher, wenn die Batterieaufladung beginnt, die elektronische Vorrichtung ohne Neustart verfügbar sein wird;
wobei das Energieverwaltungsmodul weiter konfiguriert ist, um eine maximale Dauer zu berechnen, basierend auf der Batterierestkapazität, wenn die Spannung der Batterie niedriger als oder gleich der ersten Spannung ist, und Informationen über die maximale Dauer an den Prozessor zu übertragen; und
wobei die maximale Dauer die bestimmte Zeit angibt.

2. Elektronische Vorrichtung nach Anspruch 1, die des Weiteren folgendes umfasst:
ein Kommunikationsmodul (140), konfiguriert, um in Verbindung mit einem Netzwerk Daten zu übertragen und zu empfangen;
wobei der Prozessor des Weiteren konfiguriert ist, um das Kommunikationsmodul zu deaktivieren, wenn die erste Niederspannungsunterbrechung von dem Energieverwaltungsmodul empfangen wird.

3. Elektronische Vorrichtung nach Anspruch 1, die des Weiteren folgendes umfasst:
eine Anzeige (130),
wobei der Prozessor konfiguriert ist, um ein Objekt anzuzeigen, um auf der Anzeige über den Eintritt in den Schlafmodus zu informieren, wenn die erste Niederspannungsunterbrechung von dem Energieverwaltungsmodul empfangen wird.

4. Elektronische Vorrichtung nach Anspruch 1, wobei der Prozessor konfiguriert ist, um in den Schlafmodus einzutreten, nachdem eine Zeit vergangen ist, seitdem die erste Niederspannungsunterbrechung von dem Energieverwaltungsmodul empfangen wurde.

5. Elektronische Vorrichtung nach Anspruch 1, wobei das Energieverwaltungsmodul konfiguriert ist, um eine zweite Niederspannungsunterbrechung an den Prozessor zu übertragen, wenn die Spannung der Batterie niedriger als oder gleich einer zweiten Spannung ist, die niedriger ist als die erste Spannung, und
wobei der Prozessor konfiguriert ist, um den Strom der elektronischen Vorrichtung abzuschalten, wenn die zweite Niederspannungsunterbrechung von dem Energieverwaltungsmodul empfangen wird.

6. Elektronische Vorrichtung nach Anspruch 1, wobei der Prozessor so konfiguriert ist, dass die Stromversorgung der elektronischen Vorrichtung nach Ablauf der maximalen Dauer seit dem Eintritt in den Schlafmodus abgeschaltet wird.

7. Elektronische Vorrichtung nach Anspruch 1, die des Weiteren folgendes umfasst:
eine Anzeige,
wobei der Prozessor konfiguriert ist, um ein Objekt anzuzeigen, um auf der Anzeige über die maximale Dauer zu informieren, wenn die Information über die maximale Dauer von dem Energieverwaltungsmodul her empfangen wird.

8. Elektronische Vorrichtung nach Anspruch 1, die des Weiteren folgendes umfasst:
eine Anzeige,
wobei der Prozessor konfiguriert ist, um ein Objekt anzuzeigen, um auf der Anzeige über den Eintritt in den Aufweckmodus zu informieren, wenn der Aufweckmodus beginnt.

9. Energieverwaltungsverfahren für eine elektronische Vorrichtung, wobei das Verfahren folgendes umfasst:
Erzeugung (310) einer ersten Niederspannungsunterbrechung von einem Energieverwaltungsmodul 120 her, wenn eine Batteriespannung niedriger als oder gleich einer ersten Spannung ist;
Eintritt (320) in einen Schlafmodus, wenn die erste Niederspannungsunterbrechung erzeugt wird;
Deaktivierung eines Eingabemoduls, wenn die erste Niederspannungsunterbrechung erzeugt wird;
Ignorieren (330) anderer Unterbrechungen außer einer Unterbrechung, die vom Energieverwaltungsmodul während des Schlafmodus erzeugt wird;
Eintritt (350) in einen Aufweckmodus, ohne die elektronische Vorrichtung neu zu starten, wenn eine Ladungsstartunterbrechung von dem Energieverwaltungsmodul in dem Schlafmodus innerhalb einer gewissen Zeit erzeugt wird, während welcher, wenn die Batterieaufladung beginnt, die elektronische Vorrichtung verfügbar sein wird, ohne neu zu starten; und
Berechnung einer maximalen Dauer, die auf der Batterierestkapazität basiert, wenn die Spannung der Batterie niedriger als oder gleich der ersten Spannung ist;
wobei die maximale Dauer die bestimmte Zeit angibt.

10. Energieverwaltungsverfahren nach Anspruch 9, das des Weiteren folgendes umfasst:
Anzeige eines Objekts, um auf einer Anzeige über den Eintritt in den Schlafmodus zu informieren, wenn eine erste Niederspannungsunterbrechung von dem Energieverwaltungsmodul her erzeugt wird.

11. Energieverwaltungsverfahren nach Anspruch 9, wobei der Eintritt in den Schlafmodus folgendes umfasst:
Eintritt in den Schlafmodus, nachdem einer Zeit vergangen ist, seitdem eine erste Niederspannungsunterbrechung von dem Energieverwaltungsmodul erzeugt wurde.

12. Energieverwaltungsverfahren nach Anspruch 9, das des Weiteren folgendes umfasst:
Erzeugung einer zweiten Niederspannungsunterbrechung von dem Energieverwaltungsmodul her, wenn die Spannung der Batterie niedriger als oder gleich einer zweiten Spannung ist, die niedriger ist als die erste Spannung; und
Abschalten der Stromversorgung der elektronischen Vorrichtung, wenn die zweite Niederspannungsunterbrechung erzeugt wird.

13. Computerlesbares Aufzeichnungsmittel, das ein Programm aufzeichnet, das, wenn es ausgeführt wird, eine elektronische Vorrichtung ein Verfahren ausführen lässt, das folgendes umfasst:
Erzeugung (310) einer ersten Niederspannungsunterbrechung von einem Energieverwaltungsmodul her, wenn eine Batteriespannung niedriger als oder gleich einer ersten Spannung ist;
Eintritt (320) in einen Schlafmodus, wenn die erste Niederspannungsunterbrechung erzeugt wird;
Deaktivierung eines Eingabemoduls, wenn die erste Niederspannungsunterbrechung erzeugt wird;
Ignorierung (330) anderer Unterbrechungen außer einer Unterbrechung, die vom Energieverwaltungsmodul im Schlafmodus erzeugt wird;
Eintritt in einen Aufweckmodus, ohne die elektronische Vorrichtung neu zu starten, wenn eine Ladungsstartunterbrechung von dem Energieverwaltungsmodul im Schlafmodus innerhalb einer gewissen Zeit erzeugt wird, während welcher, wenn die Batterieaufladung beginnt, die elektronische Vorrichtung verfügbar sein wird, ohne neu zu starten; und
Berechnung einer maximalen Dauer, die auf der Batterierestkapazität basiert, wenn die Spannung der Batterie niedriger als oder gleich der ersten Spannung ist;
wobei die maximale Dauer die bestimmte Zeit angibt.

## Revendications

1. Dispositif électronique (100) comprenant :
une batterie (110) configurée pour fournir de la puissance au dispositif électronique;
un module de gestion de puissance (120) configuré pour transférer une première interruption à basse tension à un processeur si une tension de la batterie est inférieure ou égale à une première tension;
un module d'entrée (150) configuré pour recevoir une instruction d'utilisateur; et
le processeur (170) configuré pour entrer en mode de veille si la première interruption à basse tension est reçue du module de gestion de puissance,
où le processeur (170) est configuré pour ignorer d'autres interruptions sauf une interruption reçue du module de gestion de puissance pendant le mode de veille;
où le module de gestion de puissance est configuré pour transférer une interruption de début de charge au processeur si la batterie commence à être chargée,
où le processeur est configuré pour inactiver le module d'entrée si la première interruption à basse tension est reçue du module de gestion de puissance,
où le processeur est configuré pour entrer en mode de réveil sans redémarrer le dispositif électronique, si l'interruption de début de charge est reçue du module de gestion de puissance en mode de veille dans un certain délai pendant lequel, si le chargement de la batterie commence, le dispositif électronique restera disponible sans besoin de le redémarrer;
où le module de gestion de puissance est, en outre, configuré pour calculer une durée maximale sur la base de la batterie résiduelle si la tension de la batterie est inférieure ou égale à la première tension, et pour transférer l'information de la durée maximale au processeur; et
où la durée maximale indique le temps déterminé.

2. Dispositif électronique selon la revendication 1, comprenant en outre :
un module de communication (140) configuré pour transmettre et recevoir des données en connexion avec un réseau;
où le processeur est, en outre, configuré pour inactiver le module de communication si la première interruption à basse tension est reçue du module de gestion de puissance.

3. Dispositif électronique selon la revendication 1, comprenant en outre :
un élément d'affichage (130),
où le processeur est configuré pour afficher un objet afin d'informer de l'entrée en mode de veille sur l'élément d'affichage si la première interruption à basse tension est reçue du module de gestion de puissance.

4. Dispositif électronique selon la revendication 1, où le processeur est configuré pour entrer en mode de veille après qu'un certain temps s'est écoulé depuis que la première interruption à basse tension est reçue du module de gestion de puissance.

5. Dispositif électronique selon la revendication 1, où le module de gestion de puissance est configuré pour transférer une deuxième interruption à basse tension au processeur si la tension de la batterie est inférieure ou égale à une deuxième tension qui est inférieure à la première tension, et
où le processeur est configuré pour couper la puissance du dispositif électronique si la deuxième interruption à basse tension est reçue du module de gestion de puissance.

6. Dispositif électronique selon la revendication 1, où le processeur est configuré pour couper la puissance du dispositif électronique après la durée maximale depuis l'entrée en mode de veille.

7. Dispositif électronique selon la revendication 1, comprenant en outre :
un élément d'affichage,
où le processeur est configuré pour afficher un objet afin d'informer de la durée maximale sur l'élément d'affichage si l'information de la durée maximale est reçue du module de gestion de puissance.

8. Dispositif électronique selon la revendication 1, comprenant en outre :
un élément d'affichage,
où le processeur est configuré pour afficher un objet afin d'informer de l'entrée en mode de réveil sur l'élément d'affichage si le mode de réveil commence.

9. Procédé de gestion de puissance d'un dispositif électronique, le procédé comprenant :
générer (310) une première interruption à basse tension d'un module de gestion de puissance 120 si une tension de batterie est inférieure ou égale à une première tension;
entrer (320) en mode de veille si la première interruption à basse tension est générée;
inactiver un module d'entrée si la première interruption à basse tension est générée;
ignorer (330) d'autres interruptions sauf une interruption générée par le module de gestion de puissance pendant le mode de veille;
entrer (350) en mode de réveil sans redémarrer le dispositif électronique lorsqu'une interruption de début de charge est générée par le module de gestion de puissance en mode de veille dans un certain délai pendant lequel, si le chargement de la batterie commence, le dispositif électronique restera disponible sans besoin de le redémarrer; et
calculer une durée maximale sur la base d'une batterie résiduelle si la tension de la batterie est inférieure ou égale à la première tension;
où la durée maximale indique le temps déterminé.

10. Procédé de gestion de puissance selon la revendication 9, comprenant en outre :
afficher un objet pour informer de l'entrée en mode de veille sur un élément d'affichage si une première interruption à basse tension est générée à partir du module de gestion de puissance.

11. Procédé de gestion de puissance selon la revendication 9, où l'entrée en mode de veille comprend :
entrer en mode de veille après qu'un certain temps s'est écoulé depuis qu'une première interruption à basse tension est générée à partir du module de gestion de puissance.

12. Procédé de gestion de puissance selon la revendication de 9, comprenant en outre :
générer une deuxième interruption à basse tension du module de gestion de puissance si la tension de la batterie est inférieure ou égale à une deuxième tension qui est inférieure à la première tension; et
couper la puissance du dispositif électronique si la deuxième interruption à basse tension est générée.

13. Support d'enregistrement lisible par ordinateur enregistrant un programme qui, lorsqu'il est exécuté, amène un dispositif électronique à réaliser un procédé comprenant :
générer (310) une première interruption à basse tension d'un module de gestion de puissance si une tension de batterie est inférieure ou égale à une première tension;
entrer (320) en mode de veille si la première interruption à basse tension est générée;
inactiver un module d'entrée si la première interruption à basse tension est générée;
ignorer (330) d'autres interruptions sauf une interruption qui est générée à partir du module de gestion de puissance en mode de veille;
entrer en mode de réveil sans redémarrer le dispositif électronique lorsqu'une interruption de début de charge est générée par le module de gestion de puissance en mode de veille dans un certain délai pendant lequel, si le chargement de la batterie commence, le dispositif électronique restera disponible sans besoin de le redémarrer; et
calculer une durée maximale sur la base d'une batterie résiduelle si la tension de la batterie est inférieure ou égale à la première tension;
où la durée maximale indique le temps déterminé.
